# EUROPÄISCHE PATENTANMELDUNG

(11) **EP 2 679 714 A2**
(43) Veröffentlichungstag der Anmeldung: **01.01.2014**
(21) Anmeldenummer: 13002923.4
(22) Anmeldetag: 06.06.2013
(51) Int. Cl.: D06F 37/20

(54) **Verfahren und Vorrichtung zum Erkennen einer Umwucht in einem Wäschebehandlungsgerät**

(30) Priorität: 26.06.2012 DE 102012012701; 06.11.2012 DE 102012021747
(71) Anmelder: Diehl AKO Stiftung & Co. KG, 88239 Wangen (DE)
(72) Erfinder: Zeh, Stefan, DE - 88239 Wangen (DE)
(74) Vertreter: Diehl Patentabteilung

(57) **Zusammenfassung**

Unwuchtig verteilte Wäsche kann in Wäschebehandlungsgeräten bei höheren Drehzahlen zu mechanischer Zerstörung führen. Bei dem hier vorgeschlagenen Verfahren zum Erkennen einer Unwucht (12a, 12b) in einem Wäschebehandlungsgerät (20), das eine drehende Trommel (3) und ein Antriebssystem (15) mit elektronischer Steuerung aufweist, wird eine Drehzahl oder eine mit der Drehzahl verknüpfte Größe in der elektronischen Steuerung als ein Drehzahlsignal (7) erfasst, der Frequenzanteil 2ter Ordnung (N2) bezogen auf die mechanische Trommeldrehzahl (N) in dem erfassten Drehzahlsignal (7) ermittelt und dann eine Unwucht in der Trommel (3) erkannt, wenn ein Wert des ermittelten Frequenzanteils 2ter Ordnung (N2) einen vorbestimmten Grenzwert überschreitet. Dieses Verfahren ist insbesondere auch zum Erkennen einer dynamischen Unwucht oder bei Wäschebehandlungsgeräten mit vertikaler Rotationsachse (8) geeignet.

## Beschreibung

Die vorliegende Erfindung betrifft ein Verfahren und eine Vorrichtung zum Erkennen einer Unwucht in einem Wäschebehandlungsgerät.

Bei Wäschebehandlungsgeräten wie zum Beispiel Haushaltswaschmaschinen und Wäschetrocknern ist üblicherweise ein Bottich über Federn und Dämpfer im feststehenden Gehäuse des Geräts schwingfähig gelagert und ist eine Wäschetrommel im Inneren des Bottichs drehbar gelagert. Um das Wäschegut in der Trommel zu entwässern, wird die Trommel auf hohe Drehzahlen wie zum Beispiel etwa 1.600 U/min beschleunigt, wobei das Wasser in der Wäsche durch Zentripetalkräfte durch die perforierte Trommelwand ausgeschleudert wird.

Bei Waschdrehzahlen von ca. 50 U/min wird die Wäsche mit der Trommelbewegung nach oben gehoben und fällt dann aufgrund der Gravitation wieder herunter. Beim Schleuderhochlauf wird die Zentripetalkraft ab einer Anlegedrehzahl von ca. 90 U/min größer als die Gravitationskraft, sodass die Wäsche dann fest am Trommelumfang anliegt. Ab der Anlegedrehzahl bleibt also die Wäscheverteilung am Umfang der Trommel unverändert.

Bei unwuchtiger Verteilung der Wäsche kann der schwingfähig gelagerte Bottich in Bewegung geraten und an das feststehende Gehäuse anschlagen. Dieses Anschlagen gilt es auszuschließen, da damit eventuell mechanische Schäden entstehen können. Außerdem sollte die Maximaldrehzahl an die Unwuchtmasse angepasst werden, um die Kräfte auf mechanische Bauteile im zulässigen Bereich zu halten.

Aus dem Stand der Technik sind verschiedene Möglichkeiten zum Erkennen einer Unwucht in einem Wäschebehandlungsgerät bekannt.

Es sind zum Beispiel Geräte auf dem Markt, bei welchen Anschlagssensoren verbaut oder Beschleunigungssensoren am Bottich angebracht sind. Ebenso sind in die Stoßdämpfer integrierte Wegesensoren bekannt, welche Schwingungen detektieren können.

Beispielhaft wird in diesem Zusammenhang auf die EP 1 693 499 B1, welche ein schwingfähig aufgehängtes Innenaggregat einer Wäschebehandlungsmaschine mit einem Schwingungssensor in dem Innenaggregat offenbart, und die DE 38 12 371 A1, welche ein Verfahren zur Messung der Wäscheverteilung bei Waschmaschinen unter Nutzung einer Temperaturmessung im Schwingungsdämpfungssystem offenbart, verwiesen.

Die zusätzliche Sensorik-Hardware bedeutet jedoch einen zusätzlichen Kostenaufwand und auch zusätzliche Ausfallwahrscheinlichkeiten des Geräts.

Ein anderer Ansatz besteht darin, die ohnehin vorhandenen Signale der Motorregelung auszuwerten. Üblicherweise werden Wäschebehandlungsgeräte mit einer drehbaren Trommel und einem Antriebsstrang für die Trommel mit elektronischen Steuerungen drehzahlgeregelt. Es ist deshalb eine elektronische Steuerung vorhanden, welcher ein zur Trommeldrehzahl proportionales Drehzahlsignal vorliegt. Es sind verschiedene Verfahren bekannt, welche zur Bestimmung der Unwucht diese ohnehin vorliegenden Signale nutzen.

Die DE 38 12 330 A1 und die DE 40 38 178 C2 beschreiben beispielhaft Verfahren zur Messung der Wäscheverteilung bzw. einer Unwucht bei Waschmaschinen und Wäscheschleudern, bei welchen bei konstanter Solldrehzahl betragsmäßige Abweichungen von der Ist-Drehzahl zur Solldrehzahl gemessen werden. In der WO 00/31332 A1 werden die Min-Max-Werte des Drehregelfehlers bei einer vorab definierten Solldrehzahl ausgewertet. Die DE 10 2010 053 104 A1 schlägt ein Verfahren zum Steuern des Betriebs einer Wäschebehandlungsvorrichtung vor, bei welchem zum Erfassen einer Unwucht ein zeitlicher Verlauf eine Phasenlage einer Drehzahlschwankung ausgewertet wird. In der EP 1 525 349 B1 ist ein Verfahren zum Bestimmen eines Kennwerts für die Unwucht einer Waschmaschinentrommel offenbart, bei welchem die Leistungsaufnahme des Antriebsmotors der Waschmaschinentrommel ausgewertet wird.

Diese herkömmlichen Verfahren sind nur geeignet zum Erkennen von statischer Unwucht, nicht jedoch zum Erkennen von dynamischer Unwucht.

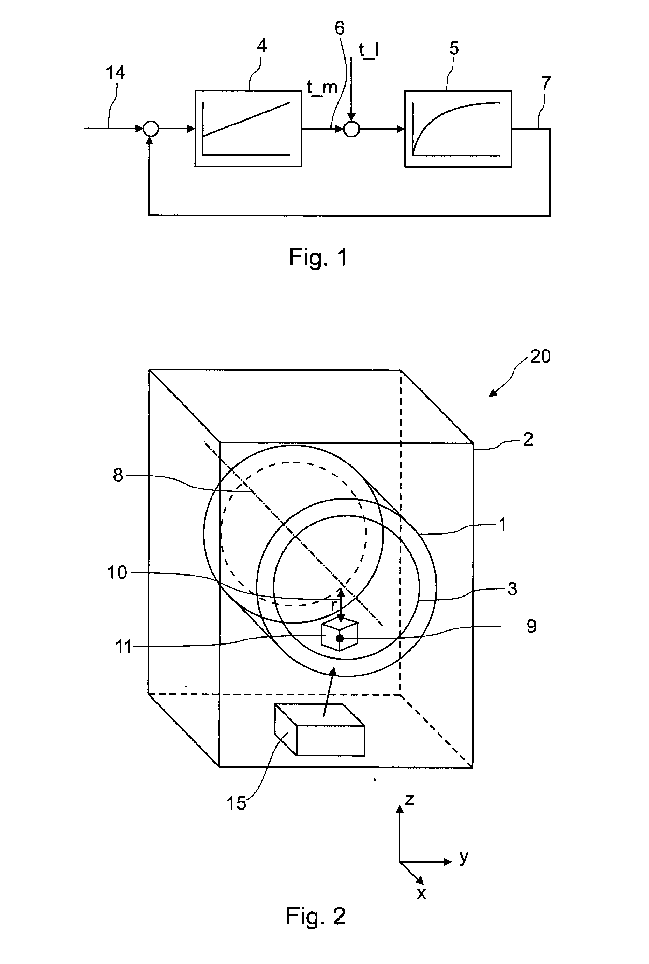

Eine statische Unwucht ist beispielhaft in Fig. 2 veranschaulicht. Sie ist dadurch gekennzeichnet, dass sich der Massenmittelpunkt 9 der Beladung in einem Abstand 10 zur Rotationsachse 8 der Trommel 3 befindet. Bei zumindest teilweise horizontaler Rotationsachse 8 führt die Gravitationskraft auf den Massenmittelpunkt 9 zusammen mit dem Abstand 10 der unwuchtig verteilten Beladung 11 zur Rotationsachse 8 dann zu Drehmomentschwankungen. Diese Drehmomentschwankungen führen zu einem Frequenzanteil 1ter Ordnung im Drehzahlsignal.

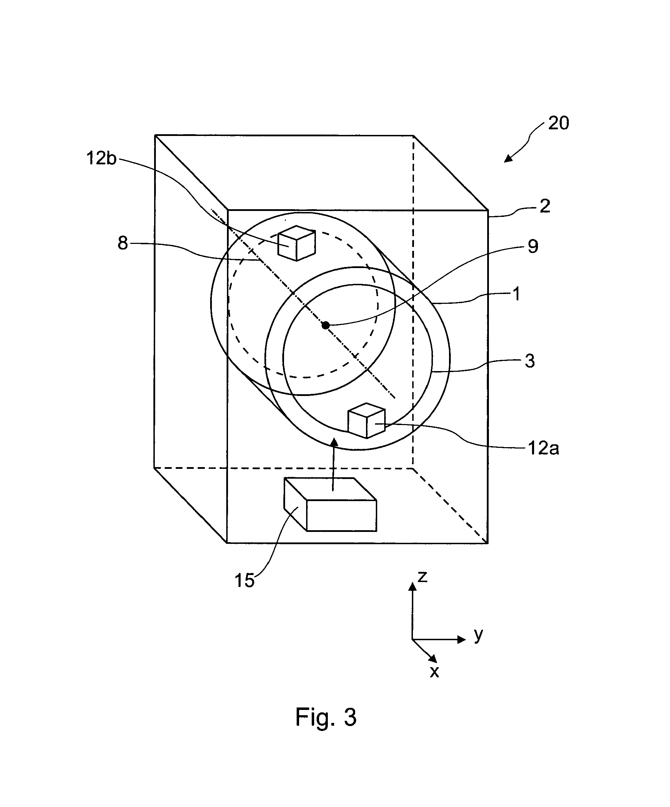

Eine so genannte "dynamische Unwucht" ist in Fig. 3 veranschaulicht. Sie ist dadurch gekennzeichnet, dass sich zwar der Massenmittelpunkt 9 trotz der unwuchtig verteilten Beladung 12a, 12b auf der Rotationsachse 8 der Trommel 3 befindet, jedoch der Trägheitsmoment-Tensor ein Ellipsoid darstellt und die Rotationsachse 8 nicht mit einer der drei Trägheitsachsen übereinstimmt. Da der Massenmittelpunkt 9 auf der Rotationsachse 8 liegt, werden keine Drehmomentschwankungen aufgrund der Gravitation erzeugt. Der Sachverhalt, dass die Rotationsachse 8 nicht mit einer der Trägheitsachsen übereinstimmt, verursacht allerdings Winkelbeschleunigungen auf die Rotationsachse 8, sodass eine Taumelbewegung (Nutation) des schwingfähig gelagerten Bottichs 1 entstehen kann.

Eine dynamische Unwucht 12a, 12b erzeugt also ebenfalls Bewegungen des Bottichs 1 und sollte zur Vermeidung von mechanischen Schäden erkannt werden. Die gedämpfte und gefederte Aufhängung des Bottichs 1 im Gehäuse 2 des Wäschebehandlungsgeräts 20 wirkt vor allem in z-Richtung, jedoch weniger in y-Richtung. Aufgrund dieser unsymmetrischen Dämpfung der Bewegungen des Bottichs 1 wirken geringe Drehmomentschwankungen auf den Antriebsstrang. Diese Drehmomentschwankungen sind jedoch Größenordnungen kleiner als die Drehmomentschwankungen aufgrund einer vergleichbar kritischen statischen Unwucht 11.

Die betragsmäßigen Schwankungen im Drehzahlsignal einer für die Mechanik gefährlichen dynamischen Unwucht entsprechen etwa den betragsmäßigen Schwankungen einer harmlosen statischen Unwucht. Herkömmliche Verfahren, welche betragsmäßige Schwankungen ermitteln, sind deshalb quasi blind für dynamische Unwucht. Ein Problem der herkömmlichen Unwuchterkennungsverfahren ist es, dass sie entweder blind sind für dynamische Unwucht oder dass eine zusätzliche Sensorik beispielsweise in Form von Beschleunigungs- oder Wegesensoren investiert werden muss.

Der Erfindung liegt die Aufgabe zugrunde, ein verbessertes Verfahren und eine verbesserte Vorrichtung zum Erkennen einer Unwucht in einem Wäschebehandlungsgerät zu schaffen, welche auch eine dynamische Unwucht erkennen können.

Diese Aufgabe wird gelöst durch ein Verfahren mit den Merkmalen des Anspruchs 1 bzw. eine Vorrichtung mit den Merkmalen des Anspruchs 6. Vorteilhafte Ausgestaltungen und Weiterbildungen der Erfindung sind Gegenstand der abhängigen Ansprüche.

Das erfindungsgemäße Verfahren zum Erkennen einer Unwucht in einem Wäschebehandlungsgerät mit einer drehenden Trommel und einem Antriebssystem mit elektronischer Steuerung enthält die Schritte des Erfassens eines Drehzahlsignals einer Drehzahl oder einer mit der Drehzahl verknüpften Größe in der elektronischen Steuerung; des Ermitteins des Frequenzanteils 2ter Ordnung bezogen auf die mechanische Trommeldrehzahl in dem erfassten Drehzahlsignal; und des Erkennens einer Unwucht in der Trommel, wenn ein Wert des ermittelten Frequenzanteils 2ter Ordnung einen vorbestimmten Grenzwert überschreitet.

Die erfindungsgemäße Vorrichtung zum Erkennen einer Unwucht in einem Wäschebehandlungsgerät mit einer drehenden Trommel und einem Antriebssystem mit elektronischer Steuerung weist eine Erfassungseinrichtung zum Erfassen eines Drehzahlsignals einer Drehzahl oder einer mit der Drehzahl verknüpften Größe in der elektronischen Steuerung; eine Ermittlungseinrichtung zum Ermitteln des Frequenzanteils 2ter Ordnung bezogen auf die mechanische Trommeldrehzahl in dem erfassten Drehzahlsignal; und eine Vergleichseinrichtung zum Vergleichen eines Werts des ermittelten Frequenzanteils 2ter Ordnung mit einem vorbestimmten Grenzwert auf.

Der vorliegenden Erfindung liegt die Beobachtung zugrunde, dass bei Vorhandensein einer dynamischen Unwucht in der Trommel in einem Drehzahlsignal Frequenzanteile mit doppelter Grundfrequenz auftreten und diese Frequenzanteile 2ter Ordnung in einem bestimmten Trommeldrehzahlbereich, beispielsweise im Bereich von etwa 100 U/min bis etwa 200 U/min anwachsen.

Die Frequenzanteile 2ter Ordnung treten wahrscheinlich aufgrund der Aufhängung des Bottichs auf. Der Bottich ist normalerweise über mehrere Federn und Reibungsdämpfer in der vertikalen Richtung aufgehängt. Es erfolgt somit eine unterschiedliche Dämpfung der Bottichbewegung in vertikaler und in horizontaler Richtung. Die Energieübertragung auf die Federn und Dämpfer bewirkt eine Änderung der Drehenergie der Trommel und damit eine Änderung ihrer Drehzahl. Über die Reibungsdämpfer wird Energie aus dem System sowohl bei Abwärts- als auch bei Aufwärtsbewegungen dem System entnommen. So lässt sich erklären, dass Frequenzanteile 2ter Ordnung zur Trommeldrehzahl auftreten, sobald der Bottich durch statische oder dynamische Unwucht in Bewegung gerät.

Bei herkömmlichen Haushaltswaschmaschinen besitzt die Bottichaufhängung eine Resonanz bei einer Trommeldrehzahl von etwa 180 U/min. Dies bedeutet, dass eine Anregung durch Unwucht besonders bei dieser Trommeldrehzahl zu heftigen Bewegungen des Bottichs führen kann und somit auch die Frequenzanteile 2ter Ordnung in diesem Drehzahlbereich stark ansteigen.

Erfindungsgemäß wird deshalb vorgeschlagen, ein Drehzahlsignal der elektronischen Steuerung des Antriebssystems zu analysieren und den Frequenzanteil 2ter Ordnung zur aktuellen mechanischen Trommeldrehzahl zu ermitteln, um auf dieser Basis eine Unwucht, insbesondere eine dynamische Unwucht erkennen zu können.

Das erfindungsgemäße Verfahren ist insbesondere zum Erkennen einer dynamischen Unwucht in dem Wäschebehandlungsgerät und auch für Wäschebehandlungsgeräte mit vertikaler Rotationsachse der Trommel geeignet.

In dem erfindungsgemäßen Verfahren wird ein Drehzahlsignal in der elektronischen Steuerung erfasst. Dieses Drehzahlsignal enthält eine Angabe bezüglich der Drehzahl oder einer mit der Drehzahl verknüpften Größe. Im geschlossenen Regelkreis der elektronischen Steuerung des Antriebssystems werden alle Frequenzanteile im Drehzahlsignal selbstverständlich auch auf andere Signale übertragen, wie zum Beispiel das Solldrehmoment, sowie auf die abhängigen Größen der Motoransteuerung, wie zum Beispiel die Motor-Abgabeleistung oder die Leistungsaufnahme der elektronischen Steuerung. Es ist daher alternativ zur Analyse der Drehzahl selbst auch eine Analyse einer anderen - mit der Drehzahl verknüpften Größe - zielführend. Der Begriff "Drehzahlsignal" soll mithin insbesondere Signale, die eine Angabe bezüglich der Drehzahl enthalten, als auch Signale, die eine Angabe bezüglich einer mit der Drehzahl verknüpften Größe enthalten, umfassen.

Die Frequenzanteile 2ter Ordnung können vorzugsweise über einen Bandpass, oder mittels Fouriertransformation oder Fast Fourier Transformation (FFT) ermittelt werden. Die Möglichkeiten der dem Fachmann an sich bekannten Signalbearbeitung sollen hier nicht weiter ausgeführt werden.

Bekanntermaßen lassen sich periodische Funktionen durch eine (unendliche) Reihe von Sinus- und Kosinusfunktionen darstellen, deren Frequenzen ganzzahlige Vielfache der Grundfrequenz sind. Bei Vorhandensein einer Unwucht ergibt sich bei niedrigen Drehzahlen unterhalb der Anlegedrehzahl - durch das abwechselnde Anheben und Herabfallen der Wäsche in der Trommel - ein periodisches Drehzahlsignal, welches in eine Fourierreihe entwickelt werden kann. Die Sinus- und Kosinusfunktionen der Grundfrequenz werden in diesem Zusammenhang auch als 1. Harmonische oder Frequenzanteil 1ter Ordnung bezeichnet; die Sinus- und Kosinusfunktionen der doppelten Grundfrequenz werden in diesem Zusammenhang auch als 1. Oberwelle, als 2. Harmonische oder als Frequenzanteil 2ter Ordnung bezeichnet.

In einer bevorzugten Ausgestaltung der Erfindung wird während eines Schleuderhochlaufs laufend der Frequenzanteil 2ter Ordnung ermittelt und ausgewertet. Wie oben beschrieben, tritt bei Vorhandensein einer dynamischen Unwucht in der Trommel speziell im niedrigen Drehzahlbereich ein signifikanter Anstieg des Frequenzanteils 2ter Ordnung auf, sodass ein Erkennen der dynamischen Unwucht vorzugsweise während des Schleuderhochlaufs und damit bei noch unkritischen Drehzahlen durchgeführt wird.

In einer weiteren bevorzugten Ausgestaltung der Erfindung wird eine Unwucht in der Trommel erkannt, wenn ein Relativwert des ermittelten Frequenzanteils 2ter Ordnung bezogen auf einen ermittelten Frequenzanteil 2ter Ordnung bei einer vorbestimmten Trommeldrehzahl oder einem vorbestimmten Trommeldrehzahlbereich einen vorbestimmten Grenzwert überschreitet. Durch die Auswertung eines Relativwertes des ermittelten Frequenzanteils 2ter Ordnung können etwaige Exemplarstreuungen oder altersbedingte Drifts im Absolutwert ausgeglichen werden. Zusätzlich oder alternativ ist es erfindungsgemäß auch möglich, eine Unwucht zu erkennen, wenn ein Absolutwert des ermittelten Frequenzanteils 2ter Ordnung einen vorbestimmten Grenzwert überschreitet.

In einer weiteren bevorzugten Ausgestaltung der Erfindung werden in einer Tabelle obere Grenzwerte der Trommeldrehzahl für Werte des Frequenzanteils 2ter Ordnung bei einer vorbestimmten, vorzugsweise unkritischen Trommeldrehzahl und/oder für Höchstwerte des Frequenzanteils 2ter Ordnung in einem vorbestimmten, vorzugsweise unkritischen Trommeldrehzahlbereich hinterlegt. Durch diese Maßnahme kann das Wäschebehandlungsgerät besser geschützt werden, indem ein Schleuderhochlauf bei Erreichen des für die jeweils vorhandene Unwucht relevanten, oberen Grenzwertes der Trommeldrehzahl abgebrochen wird.

In einer noch weiteren Ausgestaltung der Erfindung wird auch der Frequenzanteil 1ter Ordnung bezogen auf die mechanische Trommeldrehzahl in dem erfassten Drehzahlsignal ermittelt und ausgewertet. Auf diese Weise können neben einer dynamischen Unwucht auch eine statische Unwucht sicher erkannt und so die Schutzwirkung für das Wäschebehandlungsgerät verbessert werden.

Gegenstand der Erfindung ist auch ein Wäschebehandlungsgerät wie beispielsweise eine Waschmaschine oder ein Wäschetrockner mit einer drehenden Trommel; einem Antriebssystem mit elektronischer Steuerung; und einer erfindungsgemäßen Vorrichtung zum Erkennen einer Unwucht in dem Wäschebehandlungsgerät.

Obige sowie weitere Merkmale und Vorteile der Erfindung werden aus der nachfolgenden Beschreibung bevorzugter, nicht-einschränkender Beispiele unter Bezugnahme auf die beiliegenden Zeichnungen besser verständlich. Darin zeigen:
- Fig. 1: ein regelungstechnisches Ersatzschaltbild des Drehzahlregelkreises einer elektronischen Steuerung eines Wäschebehandlungsgeräts gemäß der vorliegenden Erfindung;
- Fig. 2: eine schematische Darstellung eines Wäschebehandlungsgeräts zur Veranschaulichung einer statischen Unwucht;
- Fig. 3: eine schematische Darstellung eines Wäschebehandlungsgeräts zur Veranschaulichung einer dynamischen Unwucht;
- Fig. 4: ein Diagramm der Frequenzanteile 1ter Ordnung N1 und 2ter Ordnung N2 bezüglich der aktuellen mechanischen Trommeldrehzahl N im Drehzahlsignal des Regelkreises für den Fall einer unkritischen und rein statischen Unwucht; und
- Fig. 5: ein Diagramm der Frequenzanteile 1ter Ordnung N1 und 2ter Ordnung N2 bezüglich der aktuellen mechanischen Trommeldrehzahl N im Drehzahlsignal des Regelkreises für den Fall einer gefährlichen dynamischen Unwucht.

Die Erfindung wird nachfolgend am Beispiel einer Waschmaschine mit einer Trommel mit einer im Wesentlich horizontalen Rotationsachse als Beispiel eines Wäschebehandlungsgerätes näher beschrieben.

Wie in Fig. 2 und 3 dargestellt, weist die Waschmaschine 20 einen Bottich 1 auf, der über Federn und Dämpfer (nicht dargestellt) in einem feststehenden Gehäuse 2 schwingfähig gelagert ist. Im Innern dieses Bottichs 1 ist eine Wäschetrommel 3 drehbar gelagert.

Die Wäschetrommel 3 ist mit einem Antriebssystem 15 verbunden, welches insbesondere einen Antriebsmotor für die Trommel 3 und eine elektronische Steuerung enthält.

Fig. 1 zeigt beispielhaft einen Drehzahlregelkreis der elektronischen Steuerung des Antriebssystems 15. Dieser Drehzahlregelkreis ist üblicherweise in Software abgebildet.

Der Regelkreis enthält insbesondere einen Drehzahlregler 4, dem eine SollDrehzahl als Führungsgröße 14 zugeführt wird und der zum Beispiel ein SollDrehmoment t_m als Stellgröße 6 ausgibt. Der Drehzahlregler 4, der in Software ausgeführt wird, ist vereinfacht als PI-Regler dargestellt. Die Stellgröße 6 wird - ggf. beeinflusst durch eine Störgröße t_1 aufgrund zum Beispiel einer unwuchtbedingten zusätzlichen Last durch Gravitation - einer Regelstrecke 5 zugeführt. Die Regelstrecke 5 des Regelkreises, welche physikalisch den Antriebsstrang (insbesondere der Verbund aus drehender Trommel, Getriebe und Antriebsmotor) darstellt, ist vereinfacht als PT1-Glied dargestellt. Sie ist beispielsweise durch einen Tiefpass 1ter Ordnung gekennzeichnet, welcher sich aus Trägheitsmoment und Reibung ergibt. Die von der Regelstrecke 5 ausgegebene Regelgröße wird dem Eingang des Drehzahlreglers 4 rückgeführt.

Erfindungsgemäß wird vorgeschlagen, das ohnehin im Regelkreis der elektronischen Steuerung als Regelgröße zur Verfügung stehende Drehzahlsignal 7 zu analysieren und dabei insbesondere den Frequenzanteil 2ter Ordnung N2 zur aktuellen mechanischen Trommeldrehzahl N zu bestimmen, um daraus auf eine etwaige dynamische Unwucht schließen zu können. Die Frequenzanteile 2ter Ordnung N2 können zum Beispiel über einen Bandpass oder mittels Fouriertransformation oder Fast Fourier Transformation (FFT) ermittelt werden.

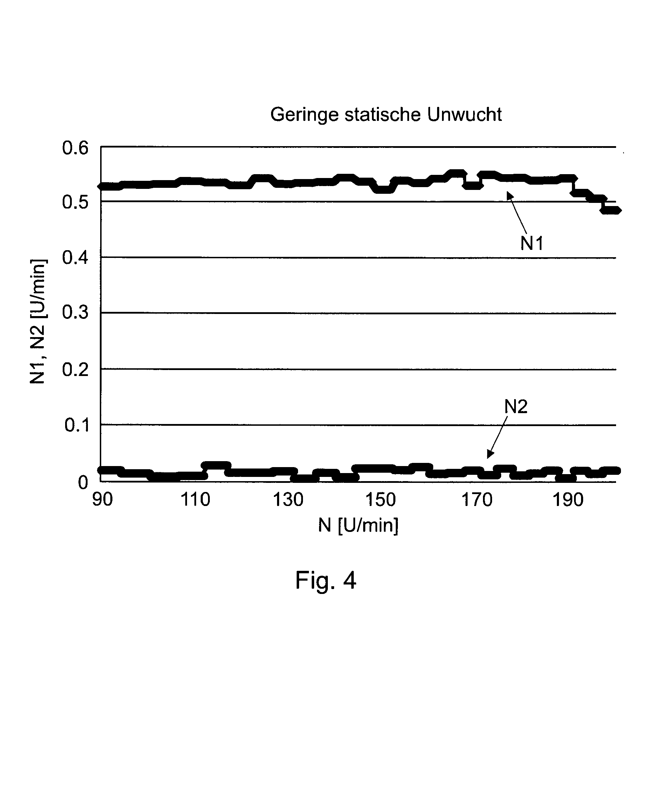

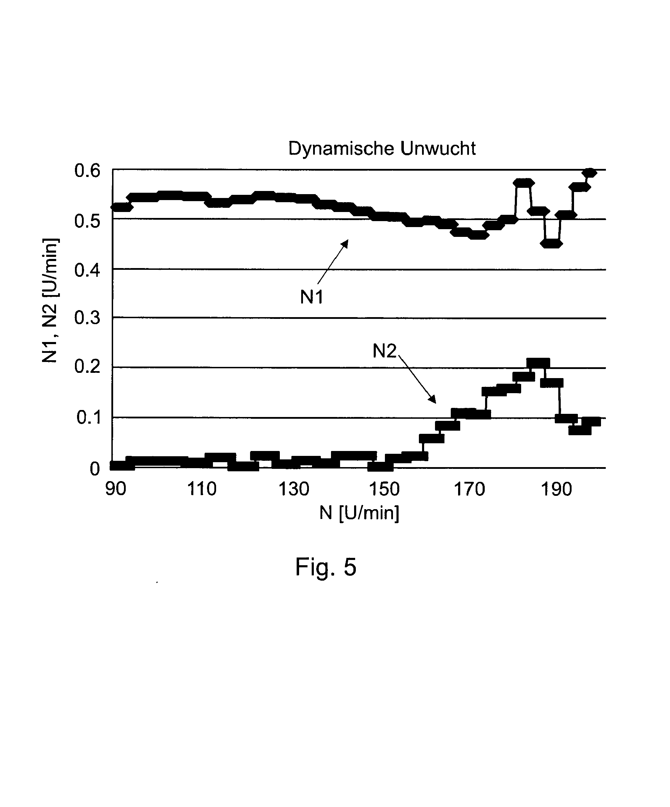

Fig. 4 und Fig. 5 zeigen das Problem, warum Messmethoden, welche allein auf der betragsmäßigen Auswertung von Schwankungen des Drehzahlsignals 7 beruhen, blind sind für eine dynamische Unwucht.

Fig. 4 zeigt innerhalb der Steuerungssoftware des Wäschebehandlungsgeräts in Echtzeit ermittelte Signale der Frequenzanteile 1ter Ordnung N1 und 2ter Ordnung N2 bezüglich der aktuellen mechanischen Trommelfrequenz im Drehzahlsignal 7 des Regelkreises, aufgetragen über der aktuellen, mittleren mechanischen Trommeldrehzahl N. In Fig. 4 ist ein harmloser Beladungsfall mit geringer, rein statischer Unwucht 11 von beispielsweise 200 g (vgl. Fig. 2) dokumentiert, welcher zu verhältnismäßig kleiner Bottichbewegung führt und somit bis zur maximalen Schleuderdrehzahl von zum Beispiel etwa 1.600 U/min hochgefahren werden kann. Bei der Anlegedrehzahl von etwa 90 U/min werden Drehzahlabweichungen von etwa ± 0,53 U/min (als Frequenzanteil 1ter Ordnung N1) gemessen. Signifikante Frequenzanteile 2ter Ordnung N2 treten in diesem Fall hingegen nicht auf.

Fig. 5 zeigt ebenfalls innerhalb der Steuerungssoftware des Wäschebehandlungsgeräts in Echtzeit ermittelte Signale der Frequenzanteile 1ter Ordnung N1 und 2ter Ordnung N2 bezüglich der aktuellen mechanischen Trommelfrequenz im Drehzahlsignal 7 des Regelkreises, aufgetragen über der aktuellen, mittleren mechanischen Trommeldrehzahl N. In Fig. 5 ist aber nun ein Fall dargestellt, bei welchem dieselbe harmlose statische Unwucht 11 von etwa 200 g vorhanden ist. Jedoch ist zudem eine Beladungsverteilung von 1.000 g in Form einer dynamischen Unwucht 12a von 500 g vorne unten und 12b von 500 g hinten oben in der Trommel 3 (vgl. Fig. 3) vorhanden. Durch diese dynamische Unwucht kann es zu unzulässig großen Taumelbewegungen der Trommel 3 und damit auch des Bottichs 1 insbesondere im Resonanzdrehzahlbereich von beispielsweise etwa 180 U/min kommen. Aufgrund der dynamischen Unwucht 12a, 12b sollte zum Schutz der Maschine die Trommel 3 deshalb nicht mit Drehzahlen höher als etwa 170 U/min betrieben werden.

Eine herkömmliche Auswertung des Frequenzanteils 1ter Ordnung N1 des Drehzahlsignals 7 ergibt also bei dem unkritischen Fall von Fig. 4 nahezu denselben Messwert wie beim kritischen Fall von Fig. 5, sodass bei dieser Auswertung die gefährliche dynamische Unwucht nach Fig. 3 unbemerkt bleiben würde.

Bei erfindungsgemäßer Betrachtung des Frequenzanteils 2ter Ordnung N2 sieht man, dass bei einer dynamischen Unwucht die Werte von N2 ab Drehzahlen größer 160 U/min signifikant ansteigen. Bei Auswertung des Frequenzanteils 2ter Ordnung können deshalb ohne zusätzliche Sensorik allein durch eine entsprechende Erweiterung der Software auch eine dynamische Unwucht sicher erkannt und durch eine entsprechende Vorgabe der Solldrehzahl kritische Zustände für die Mechanik des Wäschebehandlungsgeräts vermieden werden.

Der Frequenzanteil 2ter Ordnung N2 kann beim Hochlauf kontinuierlich ermittelt werden. Eine Drehzahlabwahl kann dann eingeleitet werden, wenn der Wert dieses Frequenzanteils 2ter Ordnung einen vorher bestimmten Grenzwert überschreitet.

Es kann eine Tabelle in der Verfahrenstechnik-Steuerung hinterlegt werden, welche das obere Drehzahllimit bei aktueller Wäscheverteilung beinhaltet. Eingangsgröße der Tabelle ist der Frequenzanteil 2ter Ordnung N2 bei einer unkritischen Drehzahl von z.B. 150 U/min.

Es kann auch eine Tabelle in der Verfahrenstechnik-Steuerung hinterlegt werden, welche das obere Drehzahllimit bei aktueller Wäscheverteilung beinhaltet. Eingangsgröße der Tabelle ist der höchste Frequenzanteil 2ter Ordnung N2, welcher in einem gewissen Drehzahlbereich, beispielsweise zwischen 100 U/min und 150 U/min gemessen wurde.

Da der Absolutwert des Frequenzanteils 2ter Ordnung N2 Exemplarstreuungen oder Altersdrift unterliegt, wird der Frequenzanteil 2ter Ordnung N2 bevorzugt auf Messwerte bei unteren Drehzahlen von zum Beispiel etwa 90 U/min bis etwa 130 U/min bezogen und die Vervielfachung bei höheren Drehzahlen bewertet.

Im Frequenzanteil 2ter Ordnung N2 werden auch Schwingungen aufgrund von statischer Unwucht repräsentiert. Zur Beurteilung der Größe der gesamten Unwucht und damit der gesamten Bottich-Bewegungen würde im Prinzip die alleinige Bewertung von N2 genügen. Da jedoch der Frequenzanteil 1ter Ordnung N1 die Auswirkung der statischen Unwucht 11 sehr gut auflöst, werden vorzugsweise auch der Frequenzanteil 1ter Ordnung N1 berechnet und daraus ebenfalls Kriterien für die Verfahrenstechnik abgeleitet. Es können so weitere Tabellen mit oberen Drehzahllimits angelegt werden, welche auf dem Frequenzanteil 1ter Ordnung N1 beruhen. Das absolute obere Drehzahllimit berechnet sich dann beispielsweise aus dem Minimum der verschiedenen Tabellen.

## Patentansprüche

1. Verfahren zum Erkennen einer Unwucht in einem Wäschebehandlungsgerät (20) mit einer drehenden Trommel (3) und einem Antriebssystem (15) mit elektronischer Steuerung, mit den Schritten:
Erfassen eines Drehzahlsignals (7) einer Drehzahl oder einer mit der Drehzahl verknüpften Größe in der elektronischen Steuerung;
Ermitteln des Frequenzanteils 2ter Ordnung (N2) bezogen auf die mechanische Trommeldrehzahl (N) in dem erfassten Drehzahlsignal (7);
und
Erkennen einer Unwucht in der Trommel (3), wenn ein Wert des ermittelten Frequenzanteils 2ter Ordnung (N2) einen vorbestimmten Grenzwert überschreitet.

2. Verfahren nach Anspruch 1,
**dadurch gekennzeichnet, dass**
während eines Schleuderhochlaufes laufend der Frequenzanteil 2ter Ordnung (N2) ermittelt wird.

3. Verfahren nach Anspruch 1 oder 2,
**dadurch gekennzeichnet, dass**
eine Unwucht in der Trommel (3) erkannt wird, wenn ein Relativwert des ermittelten Frequenzanteils 2ter Ordnung (N2) bezogen auf einen ermittelten Frequenzanteil 2ter Ordnung bei einer vorbestimmten Trommeldrehzahl oder einem vorbestimmten Trommeldrehzahlbereich einen vorbestimmten Grenzwert überschreitet.

4. Verfahren nach einem der vorhergehenden Ansprüche,
**dadurch gekennzeichnet, dass**
in einer Tabelle obere Grenzwerte der Trommeldrehzahl für Werte des Frequenzanteils 2ter Ordnung bei einer vorbestimmten, vorzugsweise unkritischen Trommeldrehzahl und/oder für Höchstwerte des Frequenzanteils 2ter Ordnung in einem vorbestimmten, vorzugsweise unkritischen Trommeldrehzahlbereich hinterlegt werden.

5. Verfahren nach einem der vorhergehenden Ansprüche,
**dadurch gekennzeichnet, dass**
auch der Frequenzanteil 1ter Ordnung (N1) bezogen auf die mechanische Trommeldrehzahl in dem erfassten Drehzahlsignal (7) ermittelt wird.

6. Vorrichtung zum Erkennen einer Unwucht in einem Wäschebehandlungsgerät (20) mit einer drehenden Trommel (3) und einem Antriebssystem (15) mit elektronischer Steuerung, insbesondere zum Durchführen des Verfahrens nach einem der vorhergehenden Ansprüche, aufweisend:
eine Erfassungseinrichtung zum Erfassen eines Drehzahlsignals (7) einer Drehzahl oder einer mit der Drehzahl verknüpften Größe in der elektronischen Steuerung;
eine Ermittlungseinrichtung zum Ermitteln des Frequenzanteils 2ter Ordnung (N2) bezogen auf die mechanische Trommeldrehzahl (N) in dem erfassten Drehzahlsignal (7); und
eine Vergleichseinrichtung zum Vergleichen eines Werts des ermittelten Frequenzanteils 2ter Ordnung (N2) mit einem vorbestimmten Grenzwert.

7. Vorrichtung nach Anspruch 6,
**dadurch gekennzeichnet, dass**
die Vergleichseinrichtung ausgestaltet ist, um einen Relativwert des ermittelten Frequenzanteils 2ter Ordnung (N2) bezogen auf einen ermittelten Frequenzanteil 2ter Ordnung bei einer vorbestimmten Trommeldrehzahl oder einem vorbestimmten Trommeldrehzahlbereich mit einem vorbestimmten Grenzwert zu vergleichen.

8. Vorrichtung nach Anspruch 6 oder 7,
**dadurch gekennzeichnet, dass**
eine Speichereinrichtung zum Speichern einer Tabelle, in welcher obere Grenzwerte der Trommeldrehzahl für Werte des Frequenzanteils 2ter Ordnung bei einer vorbestimmten, vorzugsweise unkritischen Trommeldrehzahl und/oder für Höchstwerte des Frequenzanteils 2ter Ordnung in einem vorbestimmten, vorzugsweise unkritischen Trommeldrehzahlbereich hinterlegt werden können, vorgesehen ist.

9. Vorrichtung nach einem der Ansprüche 6 bis 8,
**dadurch gekennzeichnet, dass**
eine weitere Ermittlungseinrichtung zum Ermitteln des Frequenzanteils 1ter Ordnung (N1) bezogen auf die mechanische Trommeldrehzahl in dem erfassten Drehzahlsignal (7) vorgesehen ist.

10. Wäschebehandlungsgerät (20), mit
einer drehenden Trommel (3);
einem Antriebssystem (15) mit elektronischer Steuerung; und
einer Vorrichtung zum Erkennen einer Unwucht in dem Wäschebehandlungsgerät (20) nach einem der Ansprüche 6 bis 9.
